(19)

Europäisches
Patentamt
European
Patent Office
Office européen
des brevets

(11)  **EP 2 781 542 A2**

(12)  **EUROPEAN PATENT APPLICATION**

(43) Date of publication:
24.09.2014 Bulletin 2014/39

(51) Int Cl.:
*C08J 9/00* [(2006.01)]     *C08J 9/10* [(2006.01)]

(21) Application number: **14159324.4**

(22) Date of filing: **13.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.03.2013 JP 2013057148**

(71) Applicant: **NITTO DENKO CORPORATION**
**Ibaraki-shi,**
**Osaka 567-8680 (JP)**

(72) Inventors:
• **Hirai, Bunta**
  **Osaka, 567-8680 (JP)**
• **Iwase, Takayuki**
  **Osaka, 567-8680 (JP)**

(74) Representative: **Schwabe - Sandmair - Marx**
**Patentanwälte**
**Stuntzstraße 16**
**81677 München (DE)**

(54)  **Ethylene-propylene-diene buffer material and sealing material**

(57)    A buffer material is obtained by foaming a rubber composition containing an ethylene-propylene-diene rubber. In the buffer material, the content ratio of a sulfur atom calculated based on the measurement result of a fluorescent X-ray measurement, based on mass, is 1000 ppm or less, the buffer material has a 50 % compressive load value of 0.1 $N/cm^2$ or more and 2.0 $N/cm^2$ or less, and the buffer material has a stress relaxation rate in a compressed state of 50 % after 10 seconds of compression of 60 % or more.

FIG.1

1

EP 2 781 542 A2

**Description**

BACKGROUND OF THE INVENTION

Field of the Invention

The present invention relates to a buffer material and a sealing material, to be specific, to a buffer material preferably used as a sealing material for various industrial products and a sealing material including the buffer material.

Description of Related Art

As a sealing material for various industrial products, an EPDM foamed material obtained by foaming an ethylene-propylene-diene rubber (hereinafter, may be abbreviated as an EPDM) has been conventionally known.

For example, an EPDM foamed material obtained by foaming an EPDM with a foaming agent and cross-linking the EPDM with a cross-linking agent (a vulcanizing agent) such as sulfur $S_8$ has been proposed (ref: for example, Japanese Unexamined Patent Publication No. 2006-182796). The EPDM foamed material in Japanese Unexamined Patent Publication No. 2006-182796 has a low resilience and excellent sealing properties.

SUMMARY OF THE INVENTION

When the EPDM foamed material in Japanese Unexamined Patent Publication No. 2006-182796 is used as a buffer material, however, the impact absorption is desired to be further improved in order to sufficiently ensure the fittability, the followability to irregularities, and the like with respect to an object to be buffered and furthermore, to prevent a deformation of the object to be buffered.

The EPDM foamed material is obtained by foaming an EPDM with a foaming agent and cross-linking the EPDM with sulfur. Thus, there may be a case where depending on an object to be buffered, the object to be buffered is corroded by the sulfur that remains in the EPDM foamed material.

It is an object of the present invention to provide a buffer material that has excellent impact absorption and is capable of suppressing corrosion and a sealing material.

A buffer material of the present invention is obtained by foaming a rubber composition containing an ethylene-propylene-diene rubber, wherein the content ratio of a sulfur atom calculated based on the measurement result of a fluorescent X-ray measurement, based on mass, is 1000 ppm or less, the buffer material has a 50 % compressive load value of 0.1 N/cm$^2$ or more and 2.0 N/cm$^2$ or less, and the buffer material has a stress relaxation rate in a compressed state of 50 % after 10 seconds of compression of 60 % or more.

In the buffer material of the present invention, it is preferable that the content ratio of sulfur $S_8$ calculated based on the measurement result of a gel permeation chromatography, based on mass, is 100 ppm or less.

In the buffer material of the present invention, it is preferable that the buffer material has an apparent density of 0.20 g/cm$^3$ or less.

In the buffer material of the present invention, it is preferable that the buffer material has an average cell size of 400 $\mu$m or more.

In the buffer material of the present invention, it is preferable that the rubber composition further contains a quinoid compound and the quinoid compound is a derivative of p-quinonedioxime.

In the buffer material of the present invention, it is preferable that the rubber composition further contains a cross-linking auxiliary and the cross-linking auxiliary contains a polyol.

In the buffer material of the present invention, it is preferable that the polyol is a polyethylene glycol.

In the buffer material of the present invention, it is preferable that the rubber composition further contains an organic peroxide.

In the buffer material of the present invention, it is preferable that the ethylene-propylene-diene rubber has long chain branching.

A sealing material of the present invention includes the above-described buffer material and a pressure-sensitive adhesive layer provided on a surface of the buffer material.

In the buffer material of the present invention, the content ratio of a sulfur atom calculated based on the measurement result of a fluorescent X-ray measurement, based on mass, is 1000 ppm or less, so that the corrosive properties are capable of being reduced.

Also, the 50 % compressive load value is within a specific range, so that the buffer material has excellent flexibility and excellent sealing properties.

Additionally, the stress relaxation rate in a compressed state of 50 % after 10 seconds of compression is not less than a predetermined value, so that the internal stress caused by compressing the buffer material is capable of being relaxed and the stress that acts from the buffer material that is compressed with respect to an object to be buffered is capable of being reduced and in this way, the buffer material has excellent impact absorption.

As a result, a deformation of the object to be buffered is suppressed and the buffer material is capable of being surely brought into tight contact with the object to be buffered.

The sealing material of the present invention includes the above-described buffer material, so that a gap between the objects to be buffered is capable of being surely filled with the buffer material.

BRIEF DESCRIPTION OF THE DRAWINGS

FIG 1 shows a schematic sectional view illustrating one embodiment of a sealing material of the present invention.
FIG. 2 shows an explanatory view for illustrating a measurement method of an impact absorption rate.

DETAILED DESCRIPTION OF THE INVENTION

A buffer material of the present invention is obtained by foaming a rubber composition containing an ethylene-propylene-diene rubber (hereinafter, may be referred to as an EPDM).

The EPDM is a rubber obtained by copolymerization of ethylene, propylene, and dienes. The further copolymerization of the dienes, in addition to the ethylene and the propylene, allows introduction of an unsaturated bond and enables cross-linking with a cross-linking agent.

Examples of the dienes include 5-ethylidene-2-norbornene, 1,4-hexadiene, and dicyclopentadiene. These dienes can be used alone or in combination of two or more.

In the present invention, a content of the dienes (a diene content) in the EPDM is, for example, 1 mass % or more, preferably 2 mass % or more, or more preferably 3 mass % or more, and is, for example, 20 mass % or less, or preferably 15 mass % or less. When the content of the dienes is less than the above-described lower limit value, surface shrinkage may occur in the buffer material to be obtained. When the content of the dienes is above the above-described upper limit value, a crack may occur in the buffer material.

A preferable example of the EPDM includes an EPDM having long chain branching.

A method for introducing a long branched chain into the EPDM is not particularly limited and a known method is used.

The EPDM is produced with a catalyst such as a Ziegler-Natta catalyst or a metallocene catalyst. Preferably, in view of obtaining a long branched chain, a metallocene catalyst is used.

When the EPDM has long chain branching, the elongational viscosity is increased due to the entanglement of the side chain, so that the rubber composition is capable of being excellently foamed and having flexibility.

The rubber composition contains a cross-linking agent and a foaming agent.

Examples of the cross-linking agent fail to include sulfur and include a quinoid compound and an organic peroxide.

The quinoid compound is an organic compound (a quinoid-based cross-linking agent) having a quinoid structure. Examples thereof include p-quinonedioxime, poly-p-dinitrosobenzene, and a derivative thereof. To be specific, an example of the derivative of the p-quinonedioxime includes p,p'-dibenzoylquinonedioxime.

These quinoid compounds can be used alone or in combination of two or more.

As the quinoid compound, preferably, a derivative of p-quinonedioxime is used, or more preferably, p,p'-dibenzoylquinonedioxime is used.

When the derivative of the p-quinonedioxime is used as the quinoid compound, the rubber composition is cross-linked with the derivative of the p-quinonedioxime, so that the sulfur atom content is capable of being reduced and in this way, a reduction in the corrosive properties is achieved and excellent foaming properties are capable of being ensured.

The mixing ratio of the quinoid compound with respect to 100 parts by mass of the EPDM is, for example, 0.05 parts by mass or more, or preferably 0.5 parts by mass or more, and is, for example, 30 parts by mass or less, or preferably 20 parts by mass or less. Among all, when the derivative of the p-quinonedioxime is used, the mixing ratio thereof with respect to 100 parts by mass of the EPDM is, for example, 0.05 parts by mass or more, or preferably 0.5 parts by mass or more, and is, for example, 20 parts by mass or less, preferably 10 parts by mass or less, or more preferably 5 parts by mass or less.

The organic peroxide is an organic compound (an organic peroxide-based cross-linking agent) having a peroxide structure. A preferable example thereof includes an organic peroxide having a one-minute half-life temperature of 150°C or more.

To be specific, examples thereof include dicumyl peroxide (a one-minute half-life temperature: 175°C), dimethyl di(t-butylperoxy)hexane (a one-minute half-life temperature: 180°C), 1,1-di(t-butylperoxy)cyclohexane (a one-minute half-life temperature: 154°C), and $\alpha,\alpha'$-di(t-butylperoxy)diisopropyl benzene (a one-minute half-life temperature: 175°C).

These organic peroxides can be used alone or in combination of two or more.

Preferably, the organic peroxide is used alone.

The mixing ratio of the organic peroxide (in the case of being used in combination, the total amount thereof) with respect to 100 parts by mass of the EPDM is, for example, 0.05 parts by mass or more, or preferably 0.5 parts by mass or more, and is, for example, 20 parts by mass or less, preferably 15 parts by mass or less, or more preferably 10 parts by mass or less.

As the cross-linking agent, preferably, a quinoid compound and an organic peroxide are used in combination.

When the quinoid compound and the organic peroxide are used in combination, the cross-linking on the surface of the buffer material is capable of being sufficiently ensured, so that the occurrence of tackiness on the surface is capable of being reduced.

When the quinoid compound and the organic peroxide are used in combination, in the mixing ratio thereof, the ratio of the organic peroxide with respect to 100 parts by mass of the quinoid compound is, for example, 1 part by mass or more, or preferably 10 parts by mass or more, and is, for example, 200 parts by mass or less, or preferably 100 parts by mass or less.

Examples of the foaming agent include an organic foaming agent and an inorganic foaming agent.

Examples of the organic foaming agent include an azo foaming agent such as azodicarbonamide (ADCA), barium azodicarboxylate, azobisisobutylonitrile (AIBN), azocyclohexylnitrile, and azodiaminobenzene; an N-Nitroso foaming agent such as N,N'-dinitrosopentamethylenetetramine (DTP), N,N'-dimethyl-N,N'-dinitrosoterephthalamide, and trinitrosotrimethyltriamine; a hydrazide foaming agent such as 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide); a semicarbazide foaming agent such as p-toluylenesulfonylsemicarbazide and 4,4'-oxybis(benzenesulfonylsemicarbazide); a fluorinated alkane foaming agent such as trichloromonofluoromethane and dichloromonofluoromethane; a triazole-based foaming agent such as 5-morpholyl-1,2,3,4-thiatriazole; and other known organic foaming agents. Also, an example of the organic foaming agent includes thermally expansive microparticles in which a heat-expandable substance is encapsulated in a microcapsule. An example of the thermally expansive microparticles can include a commercially available product such as Microsphere (trade name, manufactured by Matsumoto Yushi-Seiyaltu Co., Ltd.).

Examples of the inorganic foaming agent include hydrogencarbonate such as sodium hydrogen carbonate and ammonium hydrogen carbonate; carbonate such as sodium carbonate and ammonium carbonate; nitrite such as sodium nitrite and ammonium nitrite; borohydride salt such as sodium borohydride; azides; and other known inorganic foaming agents.

As the foaming agent, preferably, an organic foaming agent is used, or more preferably, an azo foaming agent is used. These foaming agents can be used alone or in combination of two or more.

The mixing ratio of the foaming agent with respect to 100 parts by mass of the EPDM is, for example, 0.1 parts by mass or more, or preferably 1 part by mass or more, and is, for example, 50 parts by mass or less, or preferably 30 parts by mass or less.

Preferably, the rubber composition contains a cross-linking auxiliary and a foaming auxiliary.

A preferable example of the cross-linking auxiliary includes a cross-linking auxiliary that fails to contain a sulfur atom in a molecule. To be specific, examples thereof include a monohydric alcohol such as ethanol, a dihydric alcohol such as ethylene glycol, a trihydric alcohol such as glycerine, and a polyol (polyoxyalkylene glycol) such as polyethylene glycol and polypropylene glycol. The polyol has a number average molecular weight of, for example, 200 or more, or preferably 300 or more.

These cross-linking auxiliaries can be used alone or in combination of two or more.

As the cross-linking auxiliary, preferably, a polyol is used.

Among all, when the derivative of the p-quinonedioxime is used as the quinoid compound, preferably, a polyethylene glycol is used.

When the polyethylene glycol is used as the polyol, the rubber composition is capable of being excellently cross-linked, so that excellent foaming properties are capable of being ensured.

The mixing ratio of the cross-linking auxiliary with respect to 100 parts by mass of the EPDM is, for example, 0.01 parts by mass or more, preferably 0.02 parts by mass or more, or more preferably 0.06 parts by mass or more, and is, for example, 10 parts by mass or less, preferably 5 parts by mass or less, or more preferably 2 parts by mass or less.

Examples of the foaming auxiliary include a urea foaming auxiliary, a salicylic acid foaming auxiliary, a benzoic acid foaming auxiliary, and a metal oxide (for example, a zinc oxide and the like). Preferably, a urea foaming auxiliary and a metal oxide are used. These foaming auxiliaries can be used alone or in combination of two or more.

The mixing ratio of the foaming auxiliary with respect to 100 parts by mass of the EPDM is, for example, 0.5 parts by mass or more, or preferably 1 part by mass or more, and is, for example, 20 parts by mass or less, or preferably 10 parts by mass or less.

The rubber composition can appropriately contain a polymer other than the EPDM, a processing auxiliary, a pigment, a flame retardant, a filler, a softener, an oxidation inhibitor, or the like as required.

Examples of the polymer other than the EPDM include a rubber-based polymer and a non-rubber-based polymer. Examples of the rubber-based polymer include a rubber-based copolymer (for example, $\alpha$-olefin (such as butene-1)-dicyclopentadiene, ethylidene norbornene, and the like) having a cyclic or acyclic polyene having non-conjugated double bonds as a component, an ethylene-propylene rubber, a silicone rubber, a fluororubber, an acrylic rubber, a polyurethane rubber, a polyamide rubber, a natural rubber, a polyisobutylene rubber, a polyisoprene rubber, a chloroprene rubber, a butyl rubber, a nitrile butyl rubber, a styrene-butadiene rubber, a styrene-butadiene-styrene rubber, a styrene-isoprene-styrene rubber, a styrene-ethylene-butadiene rubber, a styrene-ethylene-butylene-styrene rubber, a styrene-isoprene-propylene-styrene rubber, and a chlorosulfonated polyethylene rubber.

Examples of the non-rubber-based polymer include polyethylene, polypropylene, an acrylic polymer (for example, alkyl poly(meth)acrylate and the like), polyvinyl chloride, an ethylene-vinyl acetate copolymer, polyvinyl acetate, polyamide, polyester, chlorinated polyethylene, a urethane polymer, a styrene polymer, a silicone polymer, and an epoxy resin. Preferably, a non-rubber-based polymer is used, or more preferably, polyethylene is used. These polymers other than the EPDM can be used alone or in combination of two or more.

The mixing ratio of the polymer other than the EPDM with respect to 100 parts by mass of the EPDM is, for example, 100 parts by mass or less, or preferably 50 parts by mass or less, and is usually 1 part by mass or more.

The EPDM and the polymer other than the EPDM (a resin) are, as a total amount thereof, contained in the rubber composition at a mixing ratio of, for example, 20 mass % or more, or preferably 25 mass % or more, and of, for example, 30 mass % or less.

Examples of the processing auxiliary include a stearic acid and esters thereof and a zinc stearate. These processing auxiliaries can be used alone or in combination of two or more. The mixing ratio of the processing auxiliary with respect to 100 parts by mass of the EPDM is, for example, 0.1 parts by mass or more, or preferably 1 part by mass or more, and is, for example, 20 parts by mass or less, or preferably 10 parts by mass or less.

An example of the pigment includes carbon black. These pigments can be used alone or in combination of two or more. The mixing ratio of the pigment with respect to 100 parts by mass of the EPDM is, for example, 1 part by mass or more, or preferably 2 parts by mass or more, and is, for example, 50 parts by mass or less, or preferably 30 parts by mass or less.

Examples of the flame retardant include calcium hydroxide, magnesium hydroxide, and aluminum hydroxide. These flame retardants can be used alone or in combination of two or more. The mixing ratio of the flame retardant with respect to 100 parts by mass of the EPDM is, for example, 5 parts by mass or more, preferably 10 parts by mass or more, or more preferably 15 parts by mass or more, and is, for example, 200 parts by mass or less, preferably 150 parts by mass or less, or more preferably 100 parts by mass or less.

Examples of the filler include an inorganic filler such as calcium carbonate, magnesium carbonate, silicic acid and salts thereof, clay, talc, mica powders, bentonite, silica, alumina, aluminum silicate, acetylene black, and aluminum powders; an organic filler such as cork; and other known fillers. These fillers can be used alone or in combination of two or more. The mixing ratio of the filler with respect to 100 parts by mass of the EPDM is, for example, 10 parts by mass or more, preferably 30 parts by mass or more, or more preferably 50 parts by mass or more, and is, for example, 300 parts by mass or less, or preferably 200 parts by mass or less.

Examples of the softener include petroleum oils (for example, paraffinic process oil (paraffinic oil and the like), naphthenic process oil, drying oils, animal and vegetable oils (for example, linseed oil and the like), aromatic process oil, and the like); asphalts; low molecular weight polymers; organic acid esters (for example, phthalic ester (for example, di-2-ethylhexyl phthalate (DOP) and dibutyl phthalate (DBP)), phosphate ester, higher fatty acid ester, alkyl sulfonate ester, and the like); and a thickener. Preferably, petroleum oils are used, or more preferably, paraffinic process oil is used. These softeners can be used alone or in combination of two or more. The mixing ratio of the softener with respect to 100 parts by mass of the EPDM is, for example, 5 parts by mass or more, or preferably 10 parts by mass or more, and is, for example, 100 parts by mass or less, or preferably 70 parts by mass or less.

Examples of the oxidation inhibitor include 2-mercaptobenzimidazole, 2,2,4-trimethyl-1,2-dihydroquinoline, and 4,4'-bis($\alpha$,$\alpha$'-dimethylbenzyl)diphenylamine. Preferably, 2-mercaptobenzimidazole is used. These oxidation inhibitors can be used alone or in combination of two or more. The mixing ratio of the softener with respect to 100 parts by mass of the EPDM is, for example, 0.05 parts by mass or more, or preferably 0.5 parts by mass or more, and is, for example, 20 parts by mass or less, or preferably 15 parts by mass or less.

Furthermore, the rubber composition can appropriately contain a known additive as long as it does not damage the excellent effect of the buffer material to be obtained in accordance with its purpose and use. Examples of the known additive include a plasticizer, an antioxidant, a colorant, and a fungicide.

On the other hand, preferably, the rubber composition fails to contain a component containing a sulfur atom, to be specific, a vulcanizing retardant containing a sulfur atom (for example, thiazoles, thioureas, and the like).

When the rubber composition fails to contain a vulcanizing retardant such as thiazoles and thioureas, the sulfur atom content in the buffer material is capable of being reduced and a reduction in the corrosive properties is capable of being achieved.

Next, a method for producing the buffer material is described.

In order to produce the buffer material, first, the above-described components are blended to be kneaded using a kneader, a mixer, a mixing roller, or the like, so that the rubber composition is prepared as a kneaded material (a kneading step).

In the kneading step, the components can be also kneaded, while being appropriately heated. Also, in the kneading step, for example, components other than a cross-linking agent, a cross-linking auxiliary, a foaming agent, and a foaming auxiliary are first kneaded to prepare a first kneaded material. Thereafter, a cross-linking agent, a cross-linking auxiliary, a foaming agent, and a foaming auxiliary are added to the first kneaded material to be kneaded, so that the rubber composition (a second kneaded material) can be obtained. When the first kneaded material is kneaded, a part of the cross-linking auxiliary can be blended therein.

The kneaded rubber composition (the kneaded material) is extruded into a sheet shape or the like using an extruder (a molding step) and the extruded rubber composition is heated to be foamed (a foaming step).

A heat condition is appropriately selected in accordance with a cross-linking starting temperature of the cross-linking agent to be blended, a foaming temperature of the foaming agent to be blended, or the like. The rubber composition is preheated using, for example, an oven with internal air circulation at, for example, 40°C or more, or preferably 60°C or more, and at, for example, 200°C or less, or preferably 160°C or less for, for example, 1 minute or more, or preferably 5 minutes or more, and for, for example, 60 minutes or less, or preferably 40 minutes or less. After the preheating, the rubber composition is heated at, for example, 450°C or less, preferably 350°C or less, or more preferably 250°C or less, and at, for example, 100°C or more, or preferably 120°C or more for, for example, 5 minutes or more, or preferably 15 minutes or more, and for, for example, 80 minutes or less, or preferably 50 minutes or less.

According to the method for producing the buffer material, corrosion of a member is suppressed and the buffer material capable of sealing the member with excellent fittability and excellent followability to irregularities is capable of being easily produced with excellent production efficiency.

The prepared rubber composition is extruded into a sheet shape using an extruder, while being heated (a molding step) and the rubber composition is capable of being continuously cross-linked and foamed (a foaming step).

In this way, the rubber composition is foamed and cross-linked, so that the buffer material is capable of being obtained.

According to the method for producing the buffer material, the buffer material in a desired shape is capable of being easily and surely produced.

The obtained buffer material has a thickness of, for example, 0.1 mm or more, or preferably 1 mm or more, and of, for example, 50 mm or less, or preferably 45 mm or less.

The obtained buffer material has an open cell structure (an open cell ratio of 100 %) or a semi-open/semi-closed cell structure (an open cell ratio of, for example, above 0 %, or preferably 10 % or more, and of, for example, less than 100 %, or preferably 90 % or less).

When the buffer material has an open cell structure or a semi-open/semi-closed cell structure, the improvement of the flexibility is capable of being achieved and furthermore, the improvement of the filling properties of the buffer material between the members is capable of being achieved.

The buffer material has a cell size of, for example, 400 $\mu$m or more, or preferably 500 $\mu$m or more, and of, for example, 1200 $\mu$m or less, preferably 1000 $\mu$m or less, or more preferably 800 $\mu$m or less.

By setting the upper limit of the cell size of the buffer material to not more than the above-described upper limit value, the sealing properties are capable of being excellent. By setting the lower limit of the cell size of the buffer material to not less than the above-described lower limit value, the flexibility is capable of being excellent.

The buffer material obtained in this way has a volume expansion ratio (a density ratio before and after foaming) of, for example, two times or more, or preferably five times or more, and of usually 30 times or less.

By setting the volume expansion ratio (the density ratio before and after foaming) of the buffer material to not less than the above-described lower limit value, excellent foaming properties are capable of being ensured and the flexibility is capable of being excellent and furthermore, the buffer material is allowed to follow the unevenness on the surface to be sealed, so that the sealing properties are capable of being excellent. Also, by setting the volume expansion ratio to not more than the above-described upper limit value, the strength of the foamed material is capable of being excellent.

The buffer material has an apparent density (in conformity with JIS K 6767 (1999)) of, for example, 0.2 g/cm$^3$ or less, or preferably 0.17 g/cm$^3$ or less, and of usually 0.01 g/cm$^3$ or more.

By setting the apparent density of the buffer material to not more than the above-described upper limit value, the flexibility is capable of being excellent and furthermore, the buffer material is allowed to follow the unevenness on the surface to be sealed, so that the sealing properties are capable of being excellent. Also, by setting the apparent density to not less than the above-described lower limit value, the strength of the foamed material is capable of being excellent.

The buffer material has a 50 % compressive load value (in conformity with JIS K 6767 (1999)) of, for example, 0.1 N/cm$^2$ or more, or preferably 0.15 N/cm$^2$ or more, and of, for example, 2.0 N/cm$^2$ or less, or preferably 1.5 N/cm$^2$ or less.

When the 50 % compressive load value of the buffer material is not less than the above-described lower limit, the flexibility of the buffer material is capable of being improved and thus, the fittability to a member and the followability to irregularities are capable of being improved. On the other hand, when the 50 % compressive load value of the buffer material is not more than the above-described upper limit, the improvement of the flexibility is possible and a deformation of a casing (a member) is capable of being prevented.

The content ratio of a sulfur atom (the sulfur atom content) in the buffer material, based on mass, is 1000 ppm or less, preferably 800 ppm or less, or more preferably 500 ppm or less.

When the content ratio of the sulfur atom in the buffer material is within the above-described range, a reduction in the corrosive properties is capable of being achieved.

The content ratio of the sulfur atom in the buffer material is calculated based on the measurement result of a fluorescent X-ray measurement. The detailed conditions in the fluorescent X-ray measurement are described in detail in Examples later.

The sulfur atom content in the buffer material is capable of being calculated from, for example, the content of the sulfur atom in the material component and is also capable of being obtained by, for example, elemental analysis of the buffer material.

In the buffer material, the content ratio of sulfur $S_8$ calculated based on the measurement result of a gel permeation chromatography, based on mass, is, for example, 100 ppm or less, preferably 10 ppm or less, or more preferably 0 ppm.

When the content ratio of the sulfur $S_8$ in the buffer material is not more than the above-described upper limit value and not less than the above-described lower limit value, a reduction in the corrosive properties is capable of being achieved.

A calculation method of the sulfur $S_8$ is described in detail in Examples later.

The buffer material has a tensile strength (the maximum load in a tensile test in conformity with JIS K 6767 (1999)) of, for example, 1.0 N/cm$^2$ or more, or preferably 2.0 N/cm$^2$ or more, and of, for example, 50.0 N/cm$^2$ or less, or preferably 30.0 N/cm$^2$ or less.

When the tensile strength of the buffer material is set not more than the above-described upper limit value and not less than the above-described lower limit value, an excellent strength is capable of being obtained, while the flexibility is retained.

The buffer material has an elongation (in conformity with JIS K 6767 (1999)) of, for example, 10 % or more, or preferably 150 % or more, and of, for example, 1500 % or less, or preferably 1000 % or less.

When the elongation of the buffer material is within the range of not less than the above-described lower limit value and not more than the above-described upper limit value, the strength of the foamed material is capable of being excellent.

The buffer material has a stress relaxation rate of, for example, 60 % or more, or preferably 70 % or more, and of, for example, 85 % or less, or preferably 80 % or less. A calculation method of the stress relaxation rate is described in detail in Examples later.

When the stress relaxation rate of the buffer material is not less than the above-described lower limit value, a deformation of an object to be buffered is capable of being suppressed. When the stress relaxation rate of the buffer material is above the above-described upper limit value, there may be a case where a restoring force of the buffer material that is compressed is poor and the fittability of the buffer material with respect to the object to be buffered is poor. In that respect, when the stress relaxation rate of the buffer material is not more than the above-described upper limit value, an appropriate restoring force is capable of being obtained and the fittability of the buffer material with respect to the object to be buffered is capable of being improved.

The buffer material has an impact absorption rate of, for example, 70 % or more, or preferably 80 % or more, and of, for example, 100 % or less. A calculation method of the impact absorption rate is described in detail in Examples later.

The buffer material has an impact absorption rate at the time of compression of 50 % of, for example, 70 % or more, or preferably 75 % or more, and of, for example, 100 % or less, or preferably 85 % or less. A calculation method of the impact absorption rate at the time of compression of 50 % is described in detail in Examples later.

The buffer material (i.e. cushioning material) is not only used for the purpose of buffering (i.e. cushioning), but also is capable of being used for the purpose of, for example, damping, sound absorption, sound insulation, dust-proof, heat insulation, or water tight as, for example, a vibration-proof material, a sound absorbing material, a sound insulation material, a dust-proof material, a heat insulating material, or a water-stop material.

To be more specific, in the case of the buffer material having the above-described properties, the content ratio of a sulfur atom (the sulfur atom content) calculated based on the measurement result of a fluorescent X-ray measurement, based on mass, is 1000 ppm or less, so that the corrosive properties are reduced and the buffer material has a 50 % compressive load value of 0.1 N/cm$^2$ or more and 2.0 N/cm$^2$ or less, so that the flexibility is excellent. Thus, when the buffer material is used, corrosion of a member is suppressed and the member is capable of being sealed with excellent fittability and excellent followability to irregularities, so that the buffer material is capable of being preferably used as a sealing material.

Additionally, the stress relaxation rate in a compressed state of 50 % after 10 seconds of compression is not less than a predetermined value, so that the internal stress caused by compressing the buffer material is capable of being relaxed and the stress that acts from the buffer material that is compressed with respect to an object to be buffered is capable of being reduced and in this way, the buffer material has excellent impact absorption.

As a result, a deformation of the object to be buffered is suppressed and the buffer material is capable of being surely brought into tight contact with the object to be buffered.

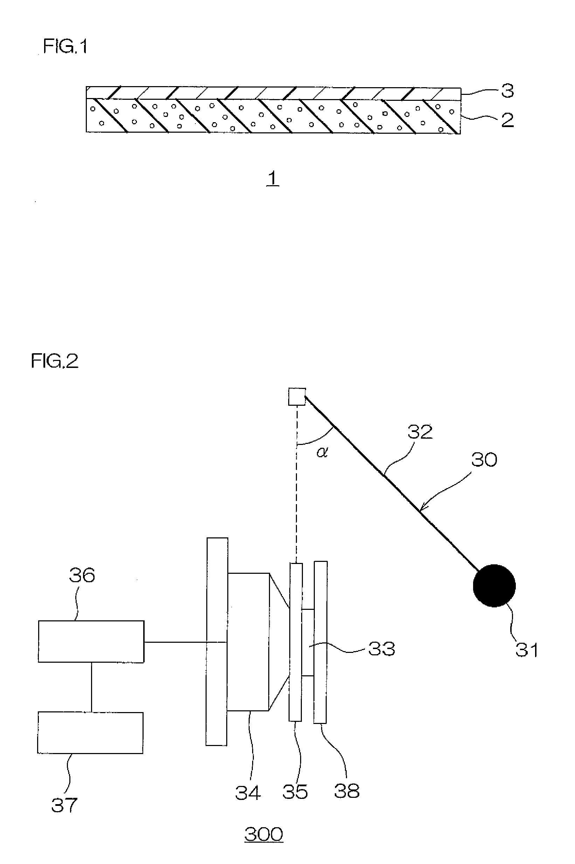

FIG. 1 shows a schematic sectional view illustrating one embodiment of a sealing material of the present invention.

The present invention includes a pressure-sensitive adhesive sealing material (a sealing material) including the above-described buffer material.

In FIG. 1, a pressure-sensitive adhesive sealing material 1 includes a foamed material layer 2 (after foaming) and a pressure-sensitive adhesive layer 3 provided on one surface (a top surface) of the foamed material layer 2.

The foamed material layer 2 is prepared from the above-described buffer material and has a thickness of, for example, 0.1 to 50 mm, or preferably 1 to 45 mm.

The pressure-sensitive adhesive layer 3 is formed of, for example, a known pressure-sensitive adhesive.

Examples of the pressure-sensitive adhesive include an acrylic pressure-sensitive adhesive, a rubber pressure-sensitive adhesive, a silicone pressure-sensitive adhesive, a polyester pressure-sensitive adhesive, a urethane pressure-sensitive adhesive, a polyamide pressure-sensitive adhesive, an epoxy pressure-sensitive adhesive, a vinyl alkyl ether pressure-sensitive adhesive, and a fluorine pressure-sensitive adhesive. In addition to these, an example of the pressure-sensitive adhesive also includes a hot melt pressure-sensitive adhesive.

These pressure-sensitive adhesives can be used alone or in combination of two or more.

As the pressure-sensitive adhesive, preferably, an acrylic pressure-sensitive adhesive and a rubber pressure-sensitive adhesive are used.

An example of the acrylic pressure-sensitive adhesive includes a pressure-sensitive adhesive mainly composed of an alkyl (meth)acrylate. The acrylic pressure-sensitive adhesive can be obtained by a known method.

The rubber pressure-sensitive adhesive can be obtained from, for example, a natural rubber and/or a synthetic rubber by a known method. To be specific, examples of a rubber include a polyisobutylene rubber, a polyisoprene rubber, a chloroprene rubber, a butyl rubber, and a nitrile butyl rubber.

A form of the pressure-sensitive adhesive is not particularly limited and various forms such as an emulsion-based pressure-sensitive adhesive, a solvent-based pressure-sensitive adhesive, an oligomer-based pressure-sensitive adhesive, or a solid pressure-sensitive adhesive can be used.

The pressure-sensitive adhesive layer 3 has a thickness of, for example, 10 to 10000 $\mu$m, or preferably 50 to 5000 $\mu$m.

A method for forming the pressure-sensitive adhesive sealing material 1 is not particularly limited and a known method can be used. To be specific, for example, first, the buffer material is produced by the above-described method to obtain the foamed material layer 2. Next, the pressure-sensitive adhesive layer 3 is laminated on the top surface of the foamed material layer 2 by a known method. In this way, the pressure-sensitive adhesive sealing material 1 is capable of being formed.

The foamed material layer 2 is prepared from the above-described buffer material, so that the pressure-sensitive adhesive sealing material 1 has excellent sealing properties and excellent corrosion resistance to metal, and the pressure-sensitive adhesive sealing material 1 also includes the pressure-sensitive adhesive layer 3, so that the foamed material layer 2 is capable of being attached to an arbitrary place. As a result, according to the pressure-sensitive adhesive sealing material 1, a gap between arbitrary members is capable of being excellently sealed by the foamed material layer 2 prepared from the above-described buffer material without corroding a metal.

In the above-described description, the pressure-sensitive adhesive layer 3 is formed as a substrateless-type pressure-sensitive adhesive tape or sheet that is formed from the pressure-sensitive adhesive only. Alternatively, for example, though not shown, the pressure-sensitive adhesive layer 3 can be also formed as a substrate-including pressure-sensitive adhesive tape or sheet.

In such a case, the pressure-sensitive adhesive layer 3 is, for example, formed as a laminated pressure-sensitive adhesive tape or sheet in which the pressure-sensitive adhesive is provided on at least one surface of the substrate, which is not shown, or preferably is provided on both surfaces of the substrate (the pressure-sensitive adhesive/the substrate/the pressure-sensitive adhesive).

The substrate (not shown) is not particularly limited and examples thereof include a plastic substrate such as a plastic film or sheet; a paper-based substrate such as paper; a fiber-based substrate such as a fabric, a non-woven fabric, and a net; a metal substrate such as a metal foil and a metal plate; a rubber substrate such as a rubber sheet; a foamed substrate such as a foamed sheet; and furthermore, a laminate thereof.

A method for forming the pressure-sensitive adhesive layer 3 as a substrate-including pressure-sensitive adhesive tape or sheet is not particularly limited and a known method can be used.

In the above-described description, the pressure-sensitive adhesive layer 3 is provided on the top surface only of the foamed material layer 2. Alternatively, for example, though not shown, the pressure-sensitive adhesive layer 3 can be also provided on both surfaces (the top surface and the back surface) of the foamed material layer 2.

According to the pressure-sensitive adhesive sealing material 1, the pressure-sensitive adhesive layer 3 is provided on both surfaces of the foamed material layer 2, so that the pressure-sensitive adhesive sealing material 1 (the foamed material layer 2) is capable of being further surely fixed to a gap between the members by the two pressure-sensitive adhesive layers 3 and in this way, the gap is capable of being further surely sealed.

The pressure-sensitive adhesive sealing material 1 includes the above-described buffer material, to be specific, the buffer material that is capable of suppressing corrosion of the member and sealing the member with excellent fittability and excellent followability to irregularities, so that the corrosion of the member is suppressed and the buffer material is capable of being surely brought into tight contact with the member and in this way, a gap between the members is capable of being surely sealed.

Examples

While the present invention will be described hereinafter in further detail with reference to Examples and Comparative Examples, the present invention is not limited to these Examples and Comparative Examples. In Examples, parts and % showing a mixing ratio are based on mass. Values such as a mixing ratio in Examples can be replaced with the upper limit value or the lower limit value corresponding to those described in the above-described embodiment.

1. Description of Materials

Materials shown in the following Table 1 are described.

(1) Resin

EPDM (A): EPT 8030M (manufactured by Mitsui Chemicals, Inc., containing long chain branching, a diene (5-ethylidene-2-norbomene) content of 9.5 mass %), using a metallocene catalyst

EPDM (B): EPT 1045 (manufactured by Mitsui Chemicals, Inc. a diene (dicyclopentadiene) content of 5.0 mass %), using a Ziegler-Natta catalyst

EPDM (C): Eptalloy PX-047 (manufactured by Mitsui Chemicals, Inc., a diene (5-ethylidene-2-norbornene) content of 4.5 mass %, polyethylene blend type, a polyethylene content of 20 PHR)

(2) Processing Auxiliary

Stearic Acid: stearic acid powder "Sakura", manufactured by NOF CORPORATION

(3) Pigment

Carbon Black: Asahi #50, manufactured by ASAHI CARBON CO., LTD.

(4) Flame Retardant

Aluminum Hydroxide (H-32): HIGILITE H-32, manufactured by SHOWA DENKO K.K.
Aluminum Hydroxide (H-42): HIGILITE H-42, manufactured by SHOWA DENKO K.K.
Magnesium Hydroxide: KISUMA 5A, manufactured by Kyowa Chemical Industry Co., Ltd.

(5) Filler

Calcium Carbonate: N heavy calcium carbonate, manufactured by MARUO CALCIUM CO., LTD.

(6) Softener

Paraffinic Oil: Diana Process Oil PW-380, manufactured by Idemitsu Kosan Co., Ltd.

(7) Cross-Linking Agent

p-quinonedioxime: VULNOC GM, manufactured by OUCHI SHINKO CHEMICAL INDUSTRIAL CO., LTD.
p,p'-dibenzoylquinonedioxime: VULNOC DGM, manufactured by OUCHI SHINKO CHEMICAL INDUSTRIAL CO., LTD.
$\alpha,\alpha'$-di(t-butylperoxy)diisopropyl benzene: PERBUTYL P-40MB, a one-minute half-life temperature: 175°C, manufactured by NOF CORPORATION
Sulfur: ALPHAGRAN S-50EN, manufactured by Touchi Co., Ltd.

(8) Cross-Linking Auxiliary

Polyethylene Glycol: PEG 4000S (a number average molecular weight of 3400)

(9) Vulcanizing Accelerator

2-Mercaptobenzothiazole: NOCCELER M, manufactured by OUCHI SHINKO CHEMICAL INDUSTRIAL CO., LTD.
N,N'-dibutylthiourea: NOCCELER BUR, manufactured by OUCHI SHINKO CHEMICAL INDUSTRIAL CO., LTD.
Zinc Dimethyldithiocarbamate: NOCCELER PZ, manufactured by OUCHI SHINKO CHEMICAL INDUSTRIAL CO., LTD.
Zinc Diethyldithiocarbamate: NOCCELER EZ, manufactured by OUCHI SHINKO CHEMICAL INDUSTRIAL CO., LTD.

(10) Foaming Agent

ADCA (Azodicarbonamide): VINYFOR AC#LQ K2, manufactured by EIWA CHEMICAL IND. CO., LTD.

(11) Foaming Auxiliary

Urea Foaming Auxiliary: CELLPASTE K5, manufactured by EIWA CHEMICAL IND. CO., LTD.
Zinc Oxide: second-class zinc oxide, manufactured by MITSUI MINING & SMELTING CO., LTD.

2. Production of Buffer Material

A resin, a processing auxiliary, a pigment, a flame retardant, a filler, a softener, and a cross-linking auxiliary were blended at a mixing amount shown in Table 1 to be kneaded with a 3L pressurizing kneader, so that a first kneaded material was prepared.
Separately, a cross-linking agent, a vulcanizing accelerator, a foaming agent, and a foaming auxiliary were blended. Thereafter, the obtained mixture was blended into the first kneaded material to be kneaded with a 10-inch mixing roll to obtain a rubber composition (a second kneaded material) (a kneading step).
Next, the rubber composition was extruded into a sheet shape having a thickness of about 8 mm using a single screw extruder (45 mm$\phi$), so that a rubber composition sheet was fabricated (a molding step).
Subsequently, the rubber composition sheet was preheated at 140°C for 20 minutes with an oven with internal air circulation. Thereafter, the temperature of the oven with internal air circulation was increased to 170°C over 10 minutes, so that the rubber composition sheet was heated at 170°C for 10 minutes to be foamed (a foaming step) and in this way, a buffer material was obtained.

3. Measurement of Properties

The properties of each of the buffer materials to be obtained were measured by a method shown in the following. The results are shown in Table 1.

(1) Apparent Density

The apparent density of each of the buffer materials was measured in conformity with JIS K 6767 (1999). To be specific, a skin layer of each of the buffer materials in Examples and Comparative Examples was removed and a test piece having a thickness of about 10 mm was prepared. Thereafter, the weight was measured to calculate the weight per unit volume (the apparent density).

(2) 50 % Compressive Load Value

The 50 % compressive load value of each of the buffer materials was measured in conformity with JIS K 6767 (1999). To be specific, a skin layer of each of the buffer materials in Examples and Comparative Examples was removed and a test piece having a thickness of about 10 mm was prepared. Thereafter, the test piece was compressed by 50 % at a compression rate of 10 mm/min using a compression testing machine to measure a 50 % compressive load value after 10 seconds of compression.

(3) Tensile Strength and Elongation

The tensile strength and the elongation of each of the buffer materials were measured in conformity with JIS K 6767 (1999). To be specific, a skin layer of each of the buffer materials in Examples and Comparative Examples was removed and a test piece having a thickness of about 10 mm was prepared. Thereafter, the test piece was stamped out using a dumbbell No. 1 to obtain a sample for measurement. The sample for measurement was pulled with a tensile testing machine at a tension rate of 500 mm/min to measure the load (the tensile strength) and the elongation of the sample for measurement at the time of being cut in a dumbbell shaped parallel portion.

(4) Sulfur Atom Content (Theoretical Value)

The content of a sulfur atom in the buffer material was calculated from the content of the sulfur atom in each of material components used in Examples and Comparative Examples.

(5) Sulfur Atom Content (Fluorescent X-Ray Measurement)

Each of the buffer materials in Examples and Comparative Examples was cut into pieces each having an appropriate size. Four pieces thereof were stacked and were subjected to a fluorescent X-ray measurement (XRF) (measurement size: 30 mm$\phi$). A device and conditions for the XRF are shown in the following.
XRF device: manufactured by Rigaku Corporation, ZXS100e
X-ray source: vertical Rh tube
Analysis area: 30 mm$\phi$
Analysis range of elements: B to U
In addition, the quantification was calculated from the proportion of elemental sulfur in the total atoms that were detected.

(6) Sulfur $S_8$ Content (GPC Measurement)

In each of the buffer materials in Examples and Comparative Examples, the content proportion of Sulfur $S_8$ was calculated based on the measurement result of a gel permeation chromatography (GPC). A process, conditions, a device, and the like are shown in the following.

(Process 1)

Each of the buffer materials was finely cut to fabricate test pieces each having an average value of the maximum length of 5 mm. Next, 300 mg of the buffer material was weighed and then, 10 ml of THF (tetrahydrofuran) was added thereto using a whole pipette to be allowed to stand overnight.
A THF solution was filtrated with a 0.45 $\mu$m membrane filter and the filtrate was subjected to a gel permeation chromatography measurement.

(Process 2)

Separately, the sulfur $S_8$ was dissolved into the THF to adjust the concentration to 1000 $\mu$g/ml and the THF solution was allowed to stand overnight. Thereafter, the THF solution was filtrated with the 0.45 $\mu$m membrane filter.

The filtrate was diluted at predetermined concentrations to fabricate reference solutions. The reference solutions were subjected to the gel permeation chromatography measurement and the calibration curve was drawn from each of the peak area values to be obtained.

(Process 3)

The mass of the sulfur $S_8$ in the test piece in the Process 1 was obtained by a calibration curve method based on the calibration curve drawn in the Process 2. The obtained value was divided by the mass (300 mg) of the test piece, so that the content proportion of the sulfur $S_8$ in the test piece was calculated.

<Measurement Device and Measurement Conditions>

GPC device: TOSOH HLC-8120 GPC
Column: TSKgel Super HZ2000/HZ2000/HZ1000/HZ1000
Column size: 6.0 mmI.D.×150 mm
Elute: THF
Flow rate: 0.6 ml/min
Detector: UV (280 nm)
Column temperature: 40°C
Injection amount: 20 $\mu$l
Detection limit: 10 ppm

(7) Average Cell Size

In each of the buffer materials in Examples and Comparative Examples, an enlarged image of a bubble portion of the foamed material was taken in with a digital microscope (VH-8000, manufactured by KEYENCE CORPORATION) and the image was analyzed using an image analysis software (Win ROOF, manufactured by MITANI CORPORATION), so that an average cell size ($\mu$m) was obtained.

(8) Stress Relaxation Rate

A test piece having a thickness of about 10 mm was compressed by 50 % at a compression rate of 10 mm/min in the same manner as the above-described measurement of the 50 % compressive load value, so that a compressive load value CL1 immediately after compression of 50 % and a compressive load value CL2 after 10 seconds of compression of 50 % were measured. Then, the stress relaxation rate was obtained from the following formula.

$$\text{Stress Relaxation Rate (\%)} = (1 - \text{CL2/CL1}) \times 100$$

(9) Impact Absorption Rate

An impact force (F0) without using a buffer material and an impact force (F1) using a buffer material were measured with a pendulum type machine shown in FIG. 2 and the impact absorption rate was obtained from the following formula.

$$\text{Impact Absorption Rate (\%)} = [(\text{F0} - \text{F1})/\text{F0}] \times 100$$

A pendulum type machine 300 is provided with a pendulum 30, a force sensor 34 (manufactured by TOYO Corporation), an aluminum board 35, a power source 36, and a Multi-purpose FTT Analyzer 37 (manufactured by ONO SOKKI CO., LTD.). The pendulum 30 is provided with an oscillator 31 made of a steel ball having a diameter of 19 mm and a weight of 28 g weight (0.27 N) and a support rod 32 having a length of 350 mm.

The buffer material to be measured was cut into a piece having a 20 mm square to obtain a test piece 33. The obtained test piece 33 was attached to the aluminum board 35 and an acrylic board 38 having a thickness of 1 mm was attached to the other side of the test piece 33. The impact force at the time of collision of the oscillator 31 to the acrylic board 38 was sensed with the force sensor 34 to be measured with the Multi-purpose FTT Analyzer 37. The pendulum 30 was allowed to collide against the acrylic board 38 from a position where an angle $\alpha$ between the support rod 32 and the vertical direction was about 45°.

(10) Impact Absorption Rate at Time of Compression of 50 %

The impact absorption rate was obtained using the test piece 33 that was compressed by 50 % in thickness in the same manner as that in the above-described impact absorption rate.

[Table 1]

Table 1

| | | Ex.1 | Ex.2 | Ex.3 | Ex.4 | Ex.5 | Ex.6 | Comp. Ex. 1 | Comp. Ex. 2 | Comp. Ex. 3 |
|---|---|---|---|---|---|---|---|---|---|---|
| Resin | EPDM (A) | 100 | 100 | 100 | 100 | 100 | | | | |
| | EPDM (B) | | | | | | 100 | | 100 | 100 |
| | EPDM (C) | | | | | | | 100 | | |
| Processing Auxiliary | Stearic Acid | 3 | 3 | 3 | 3 | 3 | 3 | 3 | 3 | 3 |
| Pigment | Carbon Black | 10 | 10 | 10 | 10 | 10 | 10 | 10 | 10 | 10 |
| Flame Retardant | Aluminum Hydroxide (H-32) | | | | | | | 30 | | |
| | Aluminum Hydroxide (H-42) | 15 | 15 | 15 | 15 | | | | | |
| | Magnesium Hydroxide | 15 | 15 | 15 | 15 | 30 | 30 | | 30 | |
| Filler | Calcium Carbonate | 150 | 150 | 150 | 150 | 150 | 150 | 150 | 150 | 200 |
| Softener | Paraffinic Oil | 30 | 30 | 30 | 30 | 35 | 35 | 35 | 35 | 35 |
| Cross-Linking Agent | p-quinonedioxime | | | | | | | | | 0.4 |
| | p,p'-dibenzoylquinonedioxime | 2.8 | 3 | 3 | 3.25 | 3 | 6 | | | |
| | α,α'-di(t-butylperoxy)diisopropyl benzene | 1 | 1 | 1 | 1 | 4 | 0.5 | | 4 | |
| | Sulfur | | | | | | | 2.4 | | |
| Cross-Linking Auxiliary | Polyethylene Glycol | 0.8 | 1 | 0.5 | 0.5 | | 3 | | | |
| Vulcanizing Accelerator | 2-mercaptobenzothiazole | | | | | | | 1 | | |
| | N,N'-dibutylthiourea | | | | | | | 1.5 | | 1 |
| | Zinc Dimethyldithiocarbamate | | | | | | | 0.8 | | |
| | Zinc Diethyldithiocarbamate | | | | | | | 0.8 | | |
| Foaming Agent | ADCA | 20 | 25 | 20 | 20 | 20 | 20 | 20 | 20 | 20 |
| Foaming Auxiliary | Urea Foaming Auxiliary | 2 | 2.5 | 2 | 2 | 5 | 5 | 2 | 5 | 5 |
| | Zinc Oxide | 5 | 5 | 5 | 5 | 5 | 5 | 5 | 5 | 5 |
| Mixing Ratio of Resin in Rubber Composition [mass %] | | 28.2 | 27.7 | 28.2 | 28.2 | 27.4 | 27.2 | 27.7 | 27.6 | 26.4 |
| Apparent Density [g/cm³] | | 0.096 | 0.089 | 0.094 | 0.092 | 0.165 | 0.133 | 0.090 | Foaming Failure | 0.085 |
| 50 % Compressive Load Value [N/cm²] | | 0.18 | 0.18 | 0.19 | 0.19 | 1.12 | 0.50 | 0.35 | | 6.34 |
| Tensile Strength [N/cm²] | | 5.89 | 4.25 | 4.46 | 4.71 | 9.2 | 7.7 | 5.5 | | - |
| Elongation [%] | | 288 | 295 | 338 | 359 | 250 | 325 | 455 | | - |
| Sulfur Amount (Theoretical Value) [ppm] | | 0 | 0 | 0 | 0 | 0 | 0 | 6782 | | 445 |
| Sulfur Amount Fluorescent X-Ray [ppm] | | 170 | 150 | 190 | 170 | 180 | 180 | 7500 | | 450 |
| Sulfur Amount GPC [ppm] | | Less than 10 | Less than 10 | Less than 10 | Less than 10 | Less than 10 | Less than 10 | 3000 | | Less than 10 |
| Cell Size [μm] | | 571 | 571 | 663 | 607 | 525 | 317 | 508 | | - |
| Stress Relaxation Rate [%] | | 75.5 | 59.1 | 67.2 | 73.7 | 71.2 | 69.2 | 86.0 | | 87.3 |
| Impact Absorption Rate (5 mm) [%] | | 87.2 | 87.1 | 84.5 | 83.8 | 85.6 | 84.6 | 86.9 | | 85.4 |
| Impact Absorption Rate at Time of Compression of 50 % (5 mm) [%] | | 79.5 | 79.6 | 77.9 | 79.9 | 81.8 | 78.6 | 78.4 | | 87.1 |

## Claims

1. A buffer material obtained by foaming a rubber composition containing an ethylene-propylene-diene rubber, wherein

the content ratio of a sulfur atom calculated based on the measurement result of a fluorescent X-ray measurement, based on mass, is 1000 ppm or less,

the buffer material has a 50 % compressive load value of 0.1 N/cm$^2$ or more and 2.0 N/cm$^2$ or less, and

the buffer material has a stress relaxation rate in a compressed state of 50 % after 10 seconds of compression of 60 % or more.

2. The buffer material according to claim 1, wherein

the content ratio of sulfur S$_8$ calculated based on the measurement result of a gel permeation chromatography, based on mass, is 100 ppm or less.

3. The buffer material according to claim 1, wherein

the buffer material has an apparent density of 0.20 g/cm$^3$ or less.

4. The buffer material according to claim 1, wherein

the buffer material has an average cell size of 400 $\mu$m or more.

5. The buffer material according to claim 1, wherein

the rubber composition further contains a quinoid compound and

the quinoid compound is a derivative of p-quinonedioxime.

6. The buffer material according to claim 1, wherein

the rubber composition further contains a cross-linking auxiliary and

the cross-linking auxiliary contains a polyol.

7. The buffer material according to claim 6, wherein

the polyol is a polyethylene glycol.

8. The buffer material according to claim 1, wherein

the rubber composition further contains an organic peroxide.

9. The buffer material according to claim 1, wherein

the ethylene-propylene-diene rubber has long chain branching.

10. A sealing material comprising:

a buffer material obtained by foaming a rubber composition containing an ethylene-propylene-diene rubber, wherein

the content ratio of a sulfur atom calculated based on the measurement result of a fluorescent X-ray measurement, based on mass, is 1000 ppm or less,

the buffer material has a 50 % compressive load value of 0.1 N/cm$^2$ or more and 2.0 N/cm$^2$ or less, and

the buffer material has a stress relaxation rate in a compressed state of 50 % after 10 seconds of compression of 60 % or more and

a pressure-sensitive adhesive layer provided on a surface of the buffer material.

FIG.1

1

FIG.2

300

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006182796 A